# FASCICULE DE BREVET EUROPEEN

(11) **EP 1 234 712 B1**
(45) Date de publication et mention de la délivrance du brevet: **28.04.2004**
(21) Numéro de dépôt: 02290364.5
(22) Date de dépôt: 14.02.2002
(51) Int. Cl.: B60N 2/42, B60N 2/56, B60R 7/04

(54) **Réhausse pour siège de véhicule automobile et procédé de montage d'une telle réhausse**
Bodenrahmen für Kraftfahrzeugsitze und Verfahren zum Montieren eines solchem Bodenrahmens
Base frame for automotive vehicle seat and method for mounting such a base frame

(30) Priorité: 22.02.2001 FR 0102425
(43) Date de publication de la demande: 28.08.2002
(73) Titulaire: Renault s.a.s., 92100 Boulogne Billancourt (FR)
(72) Inventeur: Barthon, Frédéric, 92700 Colombes (FR); Giraud, Alain, 92160 Antony (FR); Guillou, Yannick, 92150 Suresnes (FR); Hortal, Stéphane, 92300 Levallois Perret (FR)

(56) Documents cités:
- EP-A- 0 403 072
- EP-A- 0 949 115
- DE-U- 1 911 880
- FR-A- 2 757 813
- US-A- 5 556 160

## Description

La présente invention se rapporte à une rehausse pour siège de véhicule automobile comportant une structure prévue pour recevoir ledit siège et pour être fixée sur le plancher dudit véhicule.

On connaît par le brevet FR 2 757 813 une telle rehausse formant un bac de rangement et étant prévue pour recevoir ledit siège de façon amovible. Ladite rehausse comporte un dispositif de sécurité apte à favoriser le maintien d'un passager assis sur le siège, en l'espèce des points inférieurs d'accrochage amovible d'une ceinture de sécurité qui est fixée à demeure sur un point haut du siège amovible.

Une telle rehausse doit comporter une armature suffisamment solide pour résister aux sollicitations induites par un passager assis sur le siège au moment d'un choc, notamment au niveau des points d'accrochage de la ceinture de sécurité et au niveau de ses points d'assujettissement avec le plancher. De plus, le siège comporte une armature classique munie d'une traverse antisousmarinage afin d'assurer une bonne retenue du passager en cas de choc. Un tel siège intégrant une traverse complique la réalisation de l'ensemble et rend plus pénible sa manipulation, notamment lorsqu'il s'agit d'une banquette. L'ensemble formé par une telle rehausse et un tel siège est lourd, au détriment de la légèreté du véhicule.

On connaît également un plancher de véhicule automobile intégrant une bosse antisousmarinage sur laquelle est montée une assise en mousse. Une telle disposition est économique et favorable à la légèreté du véhicule mais complique la fabrication du plancher et sa réparation éventuelle. La forme d'une telle bosse est difficile à optimiser sans compliquer de façon rédhibitoire la fabrication du plancher. Une telle bosse n'est pas favorable à l'adaptation à la morphologie et à la masse de différents passagers. Elle peut difficilement intégrer un dispositif d'antisousmarinage actif.

L'un des buts de l'invention est de simplifier la réalisation de l'assise du siège et de sa rehausse au bénéfice du coût de l'ensemble.

Un autre but de l'invention est de proposer une rehausse de siège capable d'encaisser les efforts induits par le passager lors d'un choc.

Un autre but de l'invention est de proposer un dispositif antisousmarinage permettant de prendre en compte les disparités de masse et de morphologie que peuvent présenter différents passager du siège.

Un autre but de l'invention est de proposer une rehausse facilitant l'intégration d'accessoires et d'éléments d'habillage hors chaîne, au bénéfice du temps de cycle de fabrication du véhicule.

De plus, la rehausse doit être aisée à monter sur le véhicule et doit faciliter le montage des sièges.

Dans ce but, l'invention a pour objet une rehausse pour siège de véhicule automobile comportant une structure prévue pour recevoir au moins l'assise dudit siège et pour être fixée sur le plancher dudit véhicule, caractérisée en ce qu'elle comporte une traverse antisousmarinage.

Avantageusement, la traverse antisousmarinage est un élément de la structure de ladite rehausse.

Selon une caractéristique avantageuse, la traverse antisousmarinage présente un profil en V.

Selon une autre caractéristique avantageuse, la structure comporte au moins un élément longitudinal.

Selon des dispositions avantageuses :
- la structure comporte un élément longitudinal latéral à chaque extrémité de la traverse,
- la structure comporte au moins un élément longitudinal intermédiaire situé sur la traverse de façon à la diviser en parties de longueurs sensiblement égales,
- la structure comporte au moins un élément longitudinal muni de moyens d'assujettissement au plancher du véhicule automobile,
- les moyens d'assujettissement au plancher du véhicule automobile sont situés sur des extensions longitudinales de l'élément longitudinal,
- la structure comporte des moyens de fixation aptes à recevoir un équipement de sécurité de passager du siège,
- l'organe de sécurité du passager du siège est un organe d'accrochage de ceinture de sécurité,
- la structure comporte des moyens de fixation aptes à recevoir un équipement de confort,
- l'équipement de confort est un organe de rangement,
- l'équipement de confort est un accessoire multimédia,
- l'équipement de confort est un organe de climatisation,
- la rehausse comporte au moins un équipement électrique et/ou électronique et, pour la connexion de celui-ci ou de ceux-ci, un connecteur général apte à coopérer avec un connecteur du câblage général du plancher.

L'invention a aussi pour objet un procédé de montage d'une telle rehausse comportant :
- une étape d'équipement de la rehausse par montage sur la structure hors de la chaîne de montage du véhicule d'au moins un équipement de sécurité de passager du siège et d'au moins un équipement de confort,
- une étape d'indexation sur le plancher par mise en correspondance de moyens de guidage de la rehausse avec des moyens correspondants du plancher,
- une étape de fixation de la rehausse sur le plancher,
- une étape de connexion d'un connecteur général de la rehausse avec un connecteur du câblage général du plancher.

Avantageusement, l'étape d'équipement comprend le montage sur la structure d'au moins l'assise du siège hors de la chaîne de montage du véhicule.

D'autres caractéristiques et avantages de l'invention apparaîtront clairement à la lecture de la description suivante d'un mode de réalisation non limitatif de celle-ci, en liaison avec les dessins annexés sur lesquels :
- la figure 1 est une vue en perspective montrant la rehausse objet de l'invention en éclaté,
- la figure 2 est une vue trois quart avant en perspective de la rehausse objet de l'invention partiellement assemblée,
- la figure 3 est une autre vue trois quart arrière en perspective de la rehausse objet de l'invention assemblée.

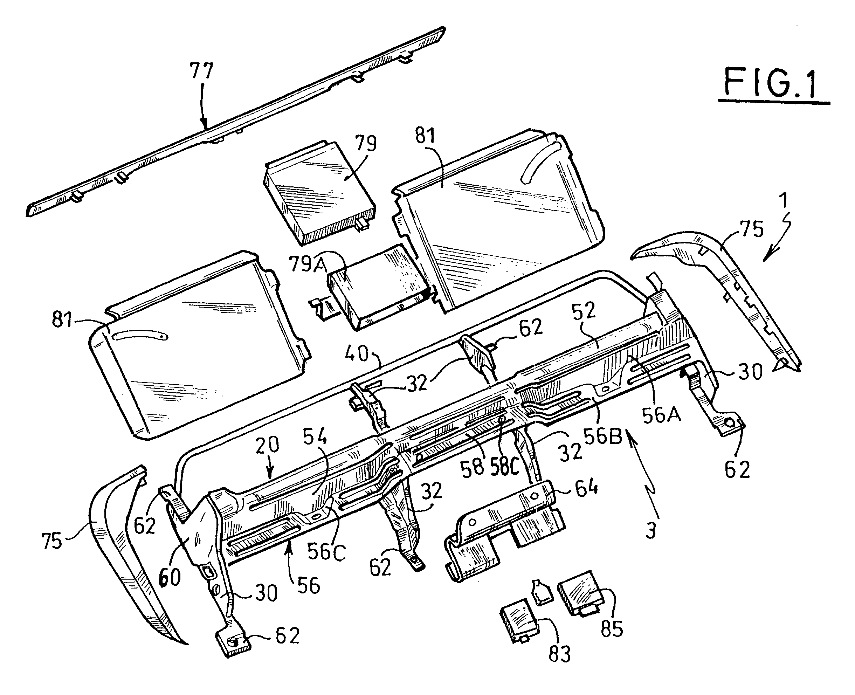

L'exemple de réalisation de rehausse 1 de siège apte à être fixée sur le plancher d'un véhicule automobile représentée à la figure 1 comporte une structure 3 supportant divers équipements tels des équipements de confort ou des équipements de sécurité.

La structure 3 comporte une traverse 20 orientée transversalement par rapport à la direction longitudinale du véhicule, des éléments latéraux 30 et intermédiaires 32 orientés selon la direction longitudinale du véhicule et un arceau avant 40.

La traverse 20 de la structure 3 de la rehausse 1 selon l'invention forme une armature principale de la structure 3. Elle est conformée de façon à constituer une structure antisousmarinage apte en cas de choc à éviter le glissement du passager sous la portion ventrale de la ceinture de sécurité.

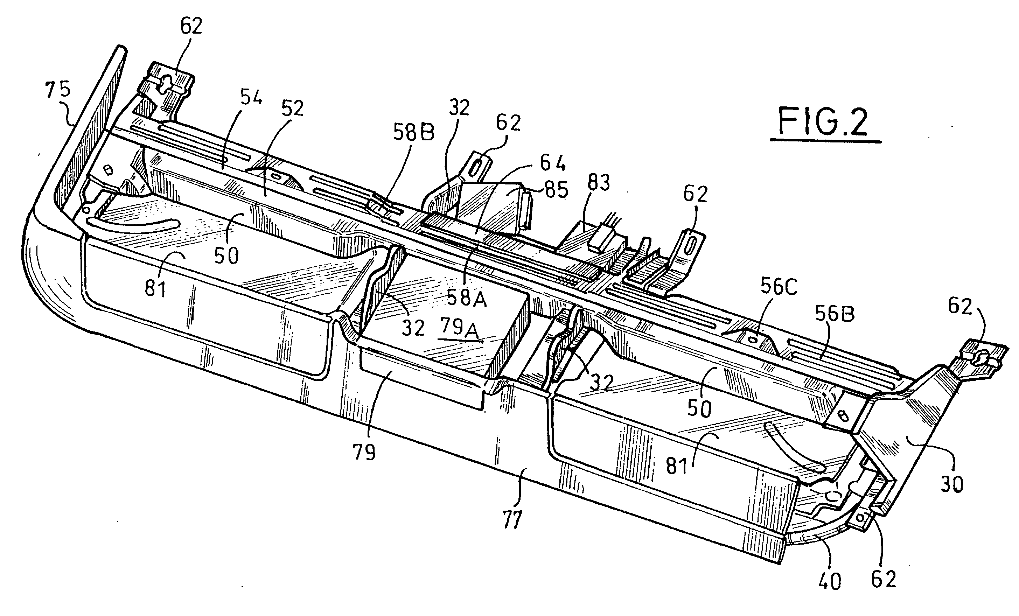

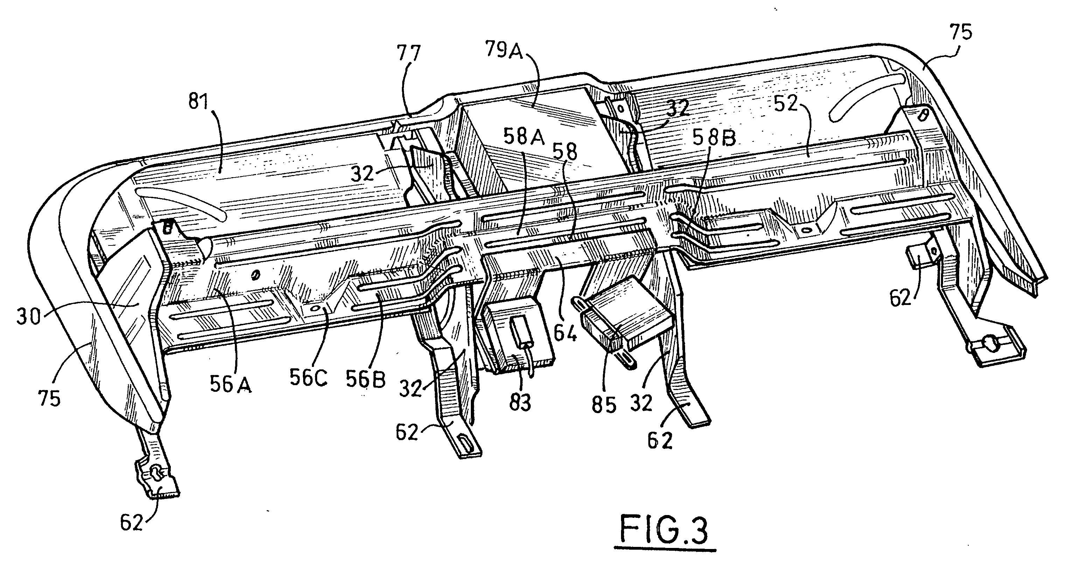

Dans l'exemple de réalisation représenté sur les figures, la traverse 20 est une tôle conformée par emboutissage et rigidifiée par des emboutis. Elle présente une paroi avant 50 (figure 2) sensiblement verticale se raccordant vers l'arrière à un sommet 52. Le sommet 52 se raccorde vers l'arrière à une paroi arrière 54 (figure 3).

La paroi avant 50 est inclinée vers l'avant et vers le bas par exemple de quelques degrés par rapport à la verticale.

La paroi arrière 54 présente trois portions correspondant chacune sensiblement à un tiers de la longueur de la traverse 20, à savoir deux portions de côté 56 et une portion centrale 58.

Chaque portion de côté 56 comporte une première portion 56A inclinée vers l'arrière et vers le bas par exemple de 10° par rapport à la verticale. La première portion inclinée 56A est raccordée d'une part au sommet 52 et d'autre part à une deuxième portion 56B inclinée vers le bas et l'arrière sensiblement à 45°.

La portion centrale 58 de la paroi arrière 54 forme un bossage au niveau duquel le sommet 52 est surélevé.

La portion centrale 58 présente à son raccordement avec le sommet 52 une partie supérieure 58A sensiblement parallèle aux deuxièmes portions inclinées 56B et deux parties latérales 58B se raccordant chacune à la partie supérieure 58A, à l'une des premières portions inclinées 56A et à l'une des deuxièmes portions inclinées 56B. Chaque partie latérale 58B est inclinée vers le bas et vers le côté de la traverse 20.

La traverse a globalement un profil en V retourné dont la paroi arrière 54 et le sommet 52 forment des zones d'appui du corps du passager en cas de choc.

Chaque deuxième portion inclinée 56B comporte un embouti 56C présentant un trou pour le passage d'un organe de fixation comme une vis ou une agrafe.

La partie supérieure 58A comporte deux trous 58C pour le passage d'un organe de fixation comme une vis ou une agrafe.

Dans l'exemple représenté, tant chaque élément longitudinal latéral 30 que chaque élément longitudinal intermédiaire 32 est constitué par une tôle conformée par emboutissage présentant une plaque 60 dont une partie centrale correspond au profil de la traverse 20 à chacune de ses extrémités et dont les autres parties forment des extensions longitudinales portant des ailes 62 de tôle rabattue à angle droit par rapport à la plaque 60.

Chaque élément longitudinal latéral 30 est monté sur une extrémité correspondante de la traverse 20, au niveau de la partie centrale de la plaque 60 correspondant au profil de la traverse 20.

Chaque élément longitudinal intermédiaire 32 est monté sur la traverse 20 environ à un tiers de la longueur de cette dernière, au niveau du raccordement de la partie supérieure 58A avec chaque partie latérale 58B. Les éléments longitudinaux intermédiaires 32 marquent la division de la traverse en trois portions de longueurs sensiblement égales.

Les ailes 62 comportent des trous pour le passage d'organe de fixation tels que les vis ou des agrafes, par exemple pour l'assujettissement de la rehausse 1 au plancher (non représenté) du véhicule automobile ou pour l'assujettissement du siège (non représenté) à la structure 3.

Dans l'exemple représenté, l'arceau avant 40 est fixé par soudage à l'extrémité libre avant en bas de chaque élément longitudinal 30, 32.

Une entretoise de fixation 64 est montée sur la partie supérieure 58A de la portion centrale 58 par encliquetage d'agrafes dans les trous 58C.

Dans l'exemple représenté, les équipements de confort sont des organes d'habillage latéraux 75 et avant 77, un accessoire multimédia 79 et des organes de rangement tels des tiroirs 81. Les équipements de sécurité sont représentés par un calculateur 83 par exemple pour le déclenchement des prétensionneurs de ceinture de sécurité. Un autre équipement, en l'espèce un connecteur général 85, est monté sur la structure 3. Le connecteur 85 est destiné à la connexion de tous les organes électriques ou électroniques montés dans la rehausse 1 tels que le calculateur 83, l'accessoire multimédia 79 ou des lampes d'éclairage des tiroirs 81. Le connecteur général 85 est prévu pour coopérer avec un connecteur du câblage général (non représenté) posé sur le plancher du véhicule.

Le calculateur 83 et le connecteur général 85 sont supportés par l'entretoise de fixation 64.

Dans l'exemple représenté, l'accessoire multimédia 79, par exemple un lecteur de disques vidéo, est fixé à la structure 3 par l'intermédiaire d'un boîtier 79A vissé au moins sur l'un des éléments longitudinaux intermédiaires 32.

Dans l'exemple représenté, le composant d'habillage avant 77 et les composants d'habillage latéraux 75 sont montés par encliquetage sur les éléments longitudinaux latéraux 30 et sur l'arceau avant 40. Le boîtier de chacun des tiroirs 81 est monté par encliquetage sur l'arceau avant 40 et par vissage dans des trous non représentés de la traverse 20.

La structure 3 permet l'intégration des divers équipements de la rehausse 1 hors de la chaîne de montage du véhicule, au bénéfice du temps de cycle de fabrication du véhicule.

La rehausse 1 selon l'invention est favorable à la facilité de montage des sièges du véhicule. En effet, il suffit à l'opérateur d'indexer et de fixer la rehausse selon l'invention sur le plancher du véhicule, par exemple par vissage de vis dans les trous de certaines des ailes 62 et dans les trous 56C, de relier le connecteur général 85 au connecteur correspondant (non représenté) du plancher, puis de fixer le siège sur la rehausse, par exemple par vissage de vis dans des trous d'autres ailes 62. De plus, comme le siège n'a pas besoin d'être pourvu de structure antisousmarinage, sa masse est réduite en conséquence et son maniement est facilité.

Dans l'exemple représenté, les trous des ailes 62 arrière des éléments longitudinaux latéraux 30 servent au vissage de la rehausse sur le plancher et les trous des ailes 62 avant des éléments longitudinaux latéraux 30 servent à coopérer avec des pions du plancher.

Les extensions longitudinales des éléments longitudinaux latéraux 30, par exemple par l'intermédiaire de certaines des ailes 62, servent de butée et de guidage longitudinal et transversal de la rehausse 1 sur des éléments complémentaires du plancher pour l'indexation de la rehausse sur le plancher lors de leur assujettissement.

La structure 3 de la rehausse 1 est favorable à la rigidité transversale de l'habitacle car elle constitue un obstacle à l'intrusion d'un véhicule lors d'une collision latérale, au bénéfice de la sécurité du passager.

La structure 3 peut supporter des équipements de confort d'un autre type que les composants d'habillage 77 et 75, les tiroirs de rangement 81 et l'accessoire multimédia 79. Elle peut par exemple comporter des organes de climatisation de l'habitacle tels que des buses et des bouches d'aération. De même, elle peut supporter d'autres équipements de sécurité du passager que le calculateur 83, par exemple des organes d'accrochage de pêne de ceinture de sécurité.

En variante de montage, au moins l'assise du siège est montée hors chaîne sur la structure de la rehausse comme les équipements de cette dernière, au bénéfice du temps de cycle de montage du véhicule. Dans ce cas, sur la chaîne de montage du véhicule, l'opérateur fixe la rehausse équipée du siège complet ou non sur le plancher et branche les connecteurs.

L'exemple de rehausse représenté sur les figures est adapté à recevoir une banquette prévue pour trois passagers. Il est aisément concevable que la structure de la rehausse selon l'invention soit aussi adaptée à un siège prévu pour recevoir un unique passager.

## Revendications

1. Rehausse (1) pour siège de véhicule automobile comportant une structure (3) prévue pour recevoir au moins l'assise dudit siège et pour être fixée sur le plancher dudit véhicule, **caractérisée en ce qu'**elle comporte une traverse antisousmarinage (20).

2. Rehausse selon la revendication 1, **caractérisée en ce que** la traverse antisousmarinage (20) est un élément de la structure (3) de ladite rehausse (1).

3. Rehausse selon l'une quelconque des revendications précédentes, **caractérisée en ce que** la traverse antisousmarinage (20) présente un profil en V.

4. Rehausse selon l'une quelconque des revendications précédentes, **caractérisée en ce que** la structure (3) comporte au moins un élément longitudinal (30, 32).

5. Rehausse selon l'une quelconque des revendications précédentes, **caractérisée en ce que** la structure (3) comporte un élément longitudinal latéral (30) à chaque extrémité de la traverse (20).

6. Rehausse selon l'une quelconque des revendications précédentes, **caractérisée en ce que** la structure (3) comporte au moins un élément longitudinal intermédiaire (32) situé sur la traverse (20) de façon à la diviser en parties de longueurs sensiblement égales.

7. Rehausse selon l'une quelconque des revendications précédentes, **caractérisée en ce que** la structure (3) comporte au moins un élément longitudinal (30, 32) muni de moyens d'assujettissement (62) au plancher du véhicule automobile.

8. Rehausse selon la revendication 7, **caractérisée en ce que** les moyens d'assujettissement (62) au plancher du véhicule automobile sont situés sur des extensions longitudinales de l'élément longitudinal (30, 32).

9. Rehausse selon l'une quelconque des revendications précédentes, **caractérisée en ce que** la structure (3) comporte des moyens de fixation (58C, 64) aptes à recevoir un équipement de sécurité (83) de passager du siège.

10. Rehausse selon la revendications 9, **caractérisée en ce que** l'organe de sécurité du passager du siège est un organe d'accrochage de ceinture de sécurité

11. Rehausse selon l'une quelconque des revendications précédentes, **caractérisée en ce que** la structure comporte des moyens de fixation aptes à recevoir un équipement de confort (75, 77, 79, 81).

12. Rehausse selon la revendication 11, **caractérisée en ce que** l'équipement de confort est un organe de rangement (81).

13. Rehausse selon l'une quelconque des revendications 11 à 12, **caractérisée en ce que** l'équipement de confort est un accessoire multimédia (79).

14. Rehausse selon l'une quelconque des revendications 11 à 13, **caractérisée en ce que** l'équipement de confort est un organe de climatisation.

15. Rehausse selon l'une quelconque des revendications précédentes, **caractérisée en ce qu'**elle comporte au moins un équipement électrique et/ou électronique (79) et, pour la connexion de celui-ci ou de ceux-ci, un connecteur général (85) apte à coopérer avec un connecteur du câblage général du plancher.

16. Procédé de montage d'une rehausse selon l'une quelconque des revendications précédentes, **caractérisé en ce qu'**il comporte :
- une étape d'équipement de ladite rehausse (1) par montage sur la structure (3) hors de la chaîne de montage du véhicule d'au moins un équipement de sécurité (83) de passager du siège et d'au moins un équipement de confort (75, 77, 79, 81),
- une étape d'indexation sur le plancher par mise en correspondance de moyens de guidage (30, 32, 62) de la rehausse avec des moyens correspondants du plancher,
- une étape de fixation de ladite rehausse (1) sur le plancher,
- une étape de connexion d'un connecteur général (85) de ladite rehausse (1) avec un connecteur du câblage général du plancher.

17. Procédé selon la revendication 16, **caractérisé en ce que** l'étape d'équipement comprend le montage sur la structure d'au moins l'assise du siège hors de la chaîne de montage du véhicule.

## Claims

1. A raised mounting assembly (1) for an automobile vehicle seat comprising a structure (3) intended to receive at least the squab of said seat and to be fixed on the floor of said vehicle, **characterised in that** it comprises an anti-submarining transverse portion (20).

2. A raised mounting assembly according to claim 1 **characterised in that** the anti-submarining transverse portion (20) is an element of the structure (3) of said raised mounting assembly (1).

3. A raised mounting assembly according to any one of the preceding claims **characterised in that** the anti-submarining transverse portion (20) is of a V-shaped profile.

4. A raised mounting assembly according to any one of the preceding claims **characterised in that** the structure (3) comprises at least one longitudinal element (30, 32).

5. A raised mounting assembly according to any one of the preceding claims **characterised in that** the structure (3) comprises a longitudinal lateral element (30) at each end of the transverse portion (20).

6. A raised mounting assembly according to any one of the preceding claims **characterised in that** the structure (3) comprises at least one longitudinal intermediate element (32) disposed on the transverse portion (20) in such a way as to divide it into parts of substantially equal lengths.

7. A raised mounting assembly according to any one of the preceding claims **characterised in that** the structure (3) comprises at least one longitudinal element (30, 32) provided with means (62) for fastening to the floor of the motor vehicle.

8. A raised mounting assembly according to claim 7 **characterised in that** the means (62) for fastening to the floor of the automobile vehicle are disposed on longitudinal extensions of the longitudinal element (30, 32).

9. A raised mounting assembly according to any one of the preceding claims **characterised in that** the structure (3) comprises fixing means (58C, 64) for receiving passenger safety equipment (83) of the seat.

10. A raised mounting assembly according to claim 9 **characterised in that** the safety member for the passenger of the seat is a safety belt fastening member.

11. A raised mounting assembly according to any one of the preceding claims **characterised in that** the structure comprises fixing means for receiving an item of comfort equipment (75, 77, 79, 81).

12. A raised mounting assembly according to claim 11 **characterised in that** the item of comfort equipment is a storage member (81),

13. A raised mounting assembly according to any one of claims 11 and 12 **characterised in that** the item of comfort equipment is a multimedia accessory (79).

14. A raised mounting assembly according to any one of claims 11 to 13 **characterised in that** the item of comfort equipment is an air conditioning member.

15. A raised mounting assembly according to any one of the preceding claims
**characterised in that** it comprises at least one item of electrical and/or electronic equipment (79) and, for the connection of it or them, a general connector (85) for cooperating with a connector of the general wiring of the floor.

16. A process of fitting a raised mounting assembly according to any one of the preceding claims **characterised in that** it comprises:
- a step of equipping the raised mounting assembly (1) by mounting on the structure (3) outside of the vehicle assembly line at least one item of safety equipment (83) for the passenger of the seat and at least one item of comfort equipment (75, 77, 79,81),
- a step of indexing on the floor by bringing guide means (30, 32, 62) of the raised mounting assembly into correspondence with corresponding means of the floor,
- a step of fixing the raised mounting assembly (1) on the floor, and
- a step of connecting a general connector (85) of the raised mounting assembly (1) to a connector of the general wiring of the floor.

17. A process according to claim 16 **characterised in that** the equipping step comprises mounting on the structure at least the squab of the seat outside of the vehicle assembly line.

## Patentansprüche

1. Aufsetzrahmen (1) für einen Sitz eines Kraftfahrzeugs, welcher eine Konstruktion (3) aufweist, die dafür vorgesehen ist, mindestens das Sitzteil des Sitzes aufzunehmen, und um auf dem Boden des Fahrzeugs befestigt zu sein,
**dadurch gekennzeichnet, dass** er einen einen Durchgang verhindernden Querträger (20) aufweist.

2. Aufsetzrahmen gemäß Anspruch 1, **dadurch gekennzeichnet, dass** der den Durchgang verhindernde Querträger (20) ein Element der Konstruktion (3) des Aufsetzrahmens (1) ist.

3. Aufsetzrahmen gemäß irgendeinem der vorangegangenen Ansprüche, **dadurch gekennzeichnet, dass** der den Durchgang verhindernde Querträger (20) ein V-förmiges Profil aufweist.

4. Aufsetzrahmen gemäß irgendeinem der vorangegangenen Ansprüche, **dadurch gekennzeichnet, dass** die Konstruktion (3) mindestens ein Längselement (30, 32) aufweist.

5. Aufsetzrahmen gemäß irgendeinem der vorangegangenen Ansprüche, **dadurch gekennzeichnet, dass** die Konstruktion (3) ein seitliches Längselement (30) an jedem Ende des Querträgers (20) aufweist.

6. Aufsetzrahmen gemäß irgendeinem der vorangegangenen Ansprüche, **dadurch gekennzeichnet, dass** die Konstruktion (3) mindestens ein Zwischenlängselement (32) aufweist, welches auf dem Querträger (20) in einer Weise angeordnet ist, dass er in Teile mit im Wesentlichen gleicher Länge aufgeteilt wird.

7. Aufsetzrahmen gemäß irgendeinem der vorangegangenen Ansprüche, **dadurch gekennzeichnet, dass** die Konstruktion (3) mindestens ein Längselement (30, 32) aufweist, das mit Befestigungsmitteln (62) am Boden des Kraftfahrzeugs ausgestattet ist.

8. Aufsetzrahmen gemäß Anspruch 7, **dadurch gekennzeichnet, dass** die Befestigungsmittel (62) am Boden des Kraftfahrzeugs an den Längserweiterungen des Längselements (30, 32) angeordnet sind.

9. Aufsetzrahmen gemäß irgendeinem der vorangegangenen Ansprüche, **dadurch gekennzeichnet, dass** die Konstruktion (3) Befestigungsmittel (58C, 64) aufweist, welche fähig sind, eine Sicherheitseinrichtung (83) des Insassen des Sitzes aufzunehmen.

10. Aufsetzrahmen gemäß Anspruch 9, **dadurch gekennzeichnet, dass** das Sicherheitsbauteil des Insassen des Sitzes ein Festhakbauteil des Sicherheitsgurtes ist.

11. Aufsetzrahmen gemäß irgendeinem der vorangegangenen Ansprüche, **dadurch gekennzeichnet, dass** die Konstruktion Befestigungsmittel aufweist, welche fähig sind, eine Komforteinrichtung (75, 77, 79, 81) aufzunehmen.

12. Aufsetzrahmen gemäß Anspruch 11, **dadurch gekennzeichnet, dass** die Komforteinrichtung ein Verstauungsbauteil (81) ist.

13. Aufsetzrahmen gemäß irgendeinem der Ansprüche 11 bis 12, **dadurch gekennzeichnet, dass** die Komforteinrichtung ein Multimedia-Zubehörteil (79) ist.

14. Aufsetzrahmen gemäß irgendeinem der Ansprüche 11 bis 13, **dadurch gekennzeichnet, dass** die Komforteinrichtung ein Bauteil einer Klimatisierung ist.

15. Aufsetzrahmen gemäß irgendeinem der vorangegangenen Ansprüche, **dadurch gekennzeichnet, dass** er mindestens eine elektrische und/oder elektronische Einrichtung (79) aufweist und für die Verbindung dieser einen allgemeinen Stecker (85), der fähig ist, mit einem allgemeinen Verkabelungsstecker des Bodens zusammenzuwirken.

16. Montageverfahren eines Aufsetzrahmens gemäß irgendeinem der vorangegangenen Ansprüche, **dadurch gekennzeichnet, dass** es umfasst:
- einen Schritt einer Bestückung des Aufsetzrahmens (1) durch Montage auf der Konstruktion (3) außerhalb des Montagebandes des Fahrzeugs von mindestens einer Sicherheitseinrichtung (83) des Insassen des Sitzes und mindestens einer Komforteinrichtung (75, 77, 79, 81);
- einen Schritt einer Indizierung auf dem Boden durch In-Übereinstimmungbringen von Führungsmitteln (30, 32, 62) des Aufsetzrahmens mit entsprechenden Mitteln des Bodens;
- einen Schritt einer Befestigung des Aufsetzrahmens (1) auf dem Boden;
- einen Schritt einer Verbindung eines allgemeinen Steckers (85) des Aufsetzrahmens (1) mit einem allgemeinen Verkabelungsstecker des Bodens.

17. Verfahren gemäß Anspruch 16, **dadurch gekennzeichnet, dass** der Schritt einer Bestückung die Montage von mindestens dem Sitzteil des Sitzes auf der Konstruktion außerhalb des Montagebandes des Fahrzeugs umfasst.
